# EUROPÄISCHE PATENTSCHRIFT

(11) **EP 0 799 734 B1**
(45) Veröffentlichungstag und Bekanntmachung des Hinweises auf die Patenterteilung: **02.04.2003**
(21) Anmeldenummer: 96119928.8
(22) Anmeldetag: 12.12.1996
(51) Int. Cl.: B60H 1/00

(54) **Heizungs- oder Klimaanlage für ein Kraftfahrzeug**
Heating or air conditioning installation for motor vehicles
Installation de chauffage ou de climatisation pour véhicule à moteur

(30) Priorität: 03.04.1996 DE 19613345
(43) Veröffentlichungstag der Anmeldung: 08.10.1997
(60) Teilanmeldung: 02012803.9
(73) Patentinhaber: Behr GmbH & Co., 70469 Stuttgart (DE)
(72) Erfinder: Bendell, Ian, 71297 Mönsheim (DE); Berndt, Ralf, D-71254 Ditzingen (DE)

(56) Entgegenhaltungen:
- DE-A- 4 425 362
- GB-A- 2 065 866
- PATENT ABSTRACTS OF JAPAN vol. 009, no. 025 (M-355), 2. Februar 1985 & JP 59 171712 A (MITSUBISHI DENKI KK), 28. September 1984

## Beschreibung

Die Erfindung betrifft eine Heizungs- oder Klimaanlage für ein Kraftfahrzeug nach dem Oberbegriff des Patentanspruchs 1.

Dokument GB-A-2065866 offenbart den Oberbegriff des Anspruchs 1.

Aus der **DE 44 10 120 C2** ist eine Klimaanlage für ein Kraftfahrzeug mit einem Gehäuse, bestehend aus einem Gebläsegehäuse, einem Gehäuseoberteil und einem Gehäuseunterteil, bekannt. Nachteilig an der bekannten Klimaanlage ist, daß mit den einzelnen Gehäuseteilen nur eine einzige Formgebung des Gehäuses erreicht werden kann. Die so gebildete Klimaanlage ist daher ausschließlich für den Einsatz in einem Kraftfahrzeug mit einem entweder auf der linken Seite desselben angeordneten Lenkrads oder auf der rechten Seite desselben angeordneten Lenkrads geeignet.

Es ist daher Aufgabe der Erfindung, eine Heizungs- oder Klimaanlage für ein Kraftfahrzeug derart weiterzubilden, daß das Gehäuse der Anlage auf einfache Weise zusammensetzbar ist, wobei die Anlage für den Einbau in einem Kraftfahrzeug mit einer in einem linken oder rechten Bereich angeordneten Instrumententafel geeignet ist.

Zur Lösung der Aufgabe weist die Erfindung die Merkmale des Patentanspruchs 1 auf. Durch den modularen Aufbau des Gehäuses bzw. des Gebläse-Segments und des Wärmeübertrager-Segments wird eine Heizungs- oder Klimaanlage geschaffen, die dem begrenzten Raumangebot innerhalb des Kraftfahrzeugs gerecht wird. Der modulare Aufbau sowohl des Gebläse-Segments als auch des Wärmeübertrager-Segments ermöglicht, daß das eine Segment unabhängig von dem anderen Segment in seinen Außenabmessungen gestaltet werden kann. So ermöglicht die Erfindung beispielsweise den Einsatz als Heizungs- oder Klimaanlage mit identischem Gebläse-Segment, wobei das Wärmeübertrager-Segment bei Einsatz als Heizungsanlage um die Tiefe des wegfallenden Verdampfers verkürzt ausgebildet sein kann. Hierdurch ist eine bedarfsgerechte Anpassung an das Platzangebot im Kraftfahrzeug ermöglicht. Weiterhin ermöglicht die Erfindung aufgrund des symmetrischen Aufbaus der Segmente, daß das Gehäuse sowohl für den Einsatz in dem Kraftfahrzeug mit einer auf der linken Seite angeordneten Instrumententafel bzw. Lenkrad als auch einer auf der rechten Seite angeordneten Instrumententafel bzw. Lenkrad eingesetzt werden kann. Die Erfindung ermöglicht somit den bezüglich einer Längsebene des Kraftfahrzeugs spiegelbildlichen Einbau der Anlage, wobei die Dimensionen der Armaturenbrettbauteile unverändert ausgelegt sein können. Das führt zu einer erleichterten Montage des Armaturenbretts insgesamt. Dies wird durch den symmetrischen Aufbau des Wärmeübertrager-Segments gewährleistet, wobei das Gebläse-Segment auf der gegenüberliegenden Seite des Wärmeübertrager-Segments nach Abnahme eines die Öffnung verdeckenden Abdeckteils arretierbar ist.

Nach einer Ausgestaltung der Erfindung sind die Segmentteile derart miteinander verbunden, daß eine randseitig am ersten Segmentteil verlaufende Feder in einer zu dieser korrespondierenden Nut des zweiten Segmentteils eingreift und mit der Nut formschlüssig verbunden ist. Dadurch, daß sich die Feder und Nut über die gesamte Länge des Randbereichs der Segmentteile erstrecken, ist eine dauerhafte und dichte Verbindung des Segmentteile gewährleistet.

Nach einer Weiterbildung der Erfindung ist zur Verbindung des Gebläse-Segments und des Wärmeübertrager-Segments ein scharnierartiges Befestigungsmittel vorgesehen, das die Führung gibt zur einfachen Montage derselben. Das erste Segmentteil weist einen Haken auf, der zu einem Bolzen des zweiten Segmentteils korrespondiert, so daß das Gebläse-Segment nach Anlage des Hakens um den Bolzen in einem ersten Verbindungsbereich und nachfolgender Schwenkbewegung durch eine Feder/Nut-Verbindung in einem zweiten Verbindungsbereich mit dem Wärmeübertrager-Segment verbunden ist. Vorteilhafterweise ist der Bolzen von der Seitenwandung des Wärmeübertrager-Segments beabstandet, damit ein leichtes Eingreifen des Hakens ermöglicht wird.

Ein Ausführungsbeispiel der Erfindung ist in der Zeichnung dargestellt und wird nachfolgend näher beschrieben.

Es zeigen:
- **Fig. 1**: Einen Teillängsschnitt der erfindungsgemäßen Anlage;
- **Fig. 2**: einen Längsschnitt der erfindungsgemäßen Anlage entlang der Schnittlinie I-I in Fig. 1;
- **Fig. 3**: einen Schnitt der erfindungsgemäßen Anlage entlang der Linie II-II in Fig. 2 und
- **Fig. 4**: eine perspektivische Darstellung einer Gebläse-Segments und eines Wärmeübertrager-Segments in einem Bereich derselben, in dem das Gebläse-Segment und das Wärmeübertrager-Segment zu der Anlage zusammengesetzt wird.

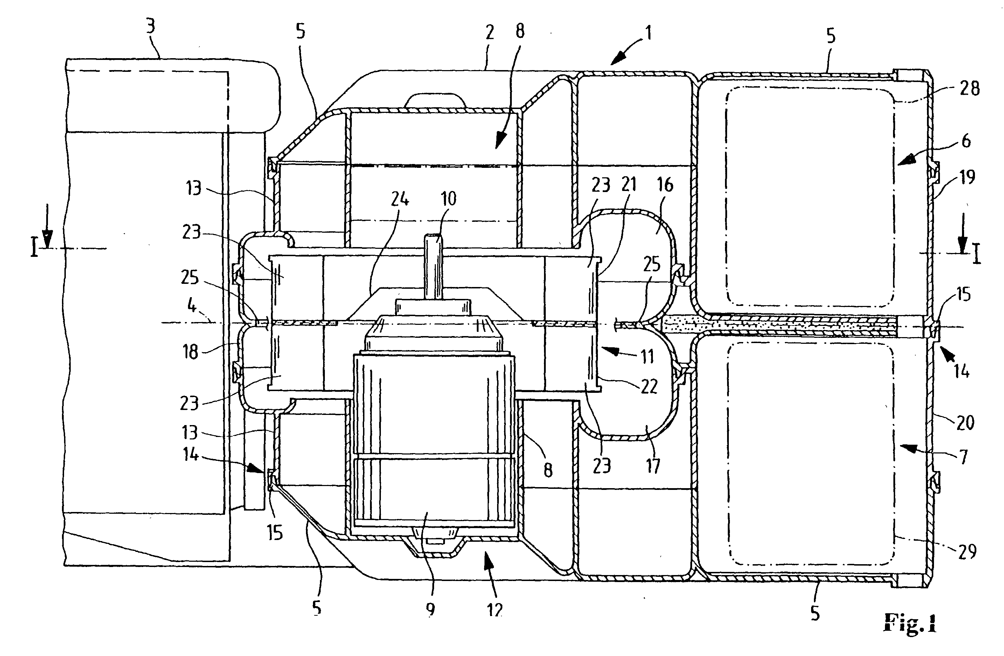

In **Fig. 1** ist eine Klimaanlage, bestehend aus einem Gehäuse 1 mit einem Gebläse-Segment 2 und einem Wärmeübertrager-Segment 3, dargestellt. Die Segmente 2 und 3 bestehen jeweils aus einem Kunststoffmaterial. Das Gebläse-Segment 2 ist bezüglich einer Mittelebene 4 symmetrisch aufgebaut und besteht aus mehreren Segmentteilen 5, 13 und 18. Ein äußeres Segmentteil 5 bildet den tragenden und wesentlichen Bestandteil des Gebläse-Segments 2, wobei am Eingang der Klimaanlage mindestens ein Frischluft-Eingangsstutzen 6 zur Zuführung von Frischluft in einem oberen Bereich und mindestens ein Umluft-Eingangsstutzen 7 zur Zuführung von Umluft in einem unteren Bereich ausgebildet ist. In einem in Luftströmrichtung vorderen Bereich weist das äußere Segmentteil 13 eine nach innen ragende zylindrische Wandung auf, die als Aufnahmetasche 8 zur Aufnahme eines Gebläsemotors 9 dient. Der in der Aufnahmetasche 8 gelagerte Gebläsemotor 9 weist eine Antriebswelle 10 auf, mit der ein Laufrad 11 drehfest verbunden ist. Ein so gebildetes Gebläse 12 kann wahlweise in einer oberen Aufnahmetasche 8 oder in einer unteren Aufnahmetasche 8 desjeweiligen äußeren Segmentteils 13 gelagert sein.

An das äußere Segmentteil 5 schließt sich in einem Randbereich zu dem Wärmeübertrager-Segment 3 jeweils das gabelförmiges Segmentteil 13 an. Zur Verbindung mit dem äußeren Segmentteil 5 weist das gabelförmige Segmentteil 13 eine Nut 14 auf, in die eine korrespondierende Feder 15 des äußeren Segmentteils 5 eingreift bzw. eingesetzt wird, so daß die beiden Segmentteile 5 und 13 formschlüssig miteinander verbunden sind. Das gabelförmige Segmentteil 13 erstreckt sich ringförmig um das Gebläse 12. Zur Ausbildung einer Frischluftkammer 16 und einer Umluftkammer 17 werden die beiden gabelförmigen Segmentteile 13 mit einem mittleren Segmentteil 18 verbunden. Zu diesem Zweck weist das mittlere Segmentteil 18 an zwei Enden jeweils eine Feder 15 auf, die jeweils in korrespondierende Nuten 14 des gabelförmigen Segmentteils 13 gehalten sind.

Die am Eingang des Gebläse-Segments 2 angeordnete obere Ansatzwandung 19 und untere Ansatzwandung 20 weisen ebenfalls Nuten 14 und Federn 15 auf, durch die sie mit dem äußeren Segmentteil 5 verbunden sind. Das Gebläse-Segment 2 wird somit aus mehreren Segmentteilen 5, 13, 18 gebildet, die durch eine Nut/Feder-Verbindung mit einer jeweiligen Feder 15 und jeweiligen Nut 14 lagerichtig gehalten sind. Durch außenseitig angebrachte, nicht dargestellte Befestigungsmittel werden die Segmente dann durch Verrastung bzw. Verclipsung kraftschlüssig miteinander verbunden.

Das Laufrad 11 besteht aus einem ersten und einem zweiten Teillaufrad 21 bzw. 22 mit Schaufeln 23, wobei die Teillaufräder 21 und 22 symmetrisch zu der Mittelebene 4 angeordnet sind und eine gemeinsame Verbindungswand 24 aufweisen. Diese Verbindungswand 24 erstreckt sich in der Mittelebene 4. Zur Ausbildung der Frischluftkammer 16 und der Umluftkammer 17, wobei die Frischluftkammer 16 mit dem Frischluft-Eingangsstutzen 6 und die Umluftkammer 17 mit dem Umluft-Eingangsstutzen 7 in Verbindung steht, weist das mittlere Segmentteil 18 eine radial laufende Trennwand 25 auf, die sich mit Abstand bis zum Laufrad 11 erstreckt. Es ist ausreichend, wenn ein geringer Abstand des Endes der Trennwand 25 zum Laufrad 11 eingehalten wird, da infolge der gerichteten, ringförmigen Ansaugung der Luft durch das Gebläse 12 ein Luftaustausch zwischen den Kammern 16 und 17 weitgehend vermieden wird. Die Verbindungswand 24 ist als durchgehende, geschlossene Wand ausgebildet, so daß im Bereich des Laufrades 11 kein Luftaustausch zwischen den Kammern 16 und 17 erfolgen kann.

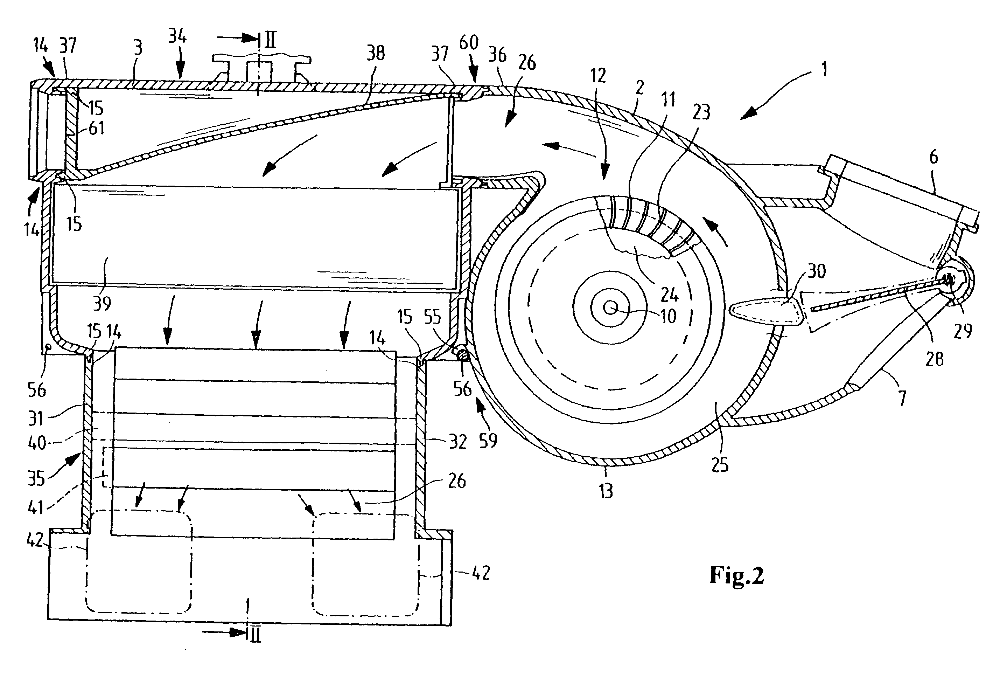

Wie aus **Fig. 2** zu ersehen ist, ist eine jeweils einem Frischluftkanal 26 und einem Umluftkanal 27 zugeordnete Eingangssteuerklappe 28 zur Steuerung der Luftmenge vorgesehen. Die beiden Eingangssteuerklappen 28 sind auf einer gemeinsamen Drehachse 29 drehbar gelagert, wobei die obere Eingangssteuerklappe 28 die durch den Frischlufteingangsstutzen 6 eingeleite Frischluftmenge in die Frischluftkammer 16 und die untere Eingangssteuerklappe 28 die durch den Umlufteingangsstutzen 7 eingeleitete Umluft in die Umluftkammer 17 steuert. Ein im Eingangsbereich angeordnetes Luftleitelement 30 verhindert, daß sich die Frischluft und die Umluft vor Eintritt in die schneckenförmig ausgebildete Frischluftkammer 16 und Umluftkammer 17 mischt.

Damit die getrennte Luftführung in einem Frischluftkanal 26 einerseits und in einem Umluftkanal 27 andererseits in dem Wärmeübertrager-Segment 3 weitgehend aufrechterhalten werden kann, weist mindestens eine der Seitenwandungen 31, 32 des Wärmeübertrager-Segments 3 eine Trennwand 33 auf, die sich von der ersten Seitenwandung 31 bis zur zweiten Seitenwandung 32 erstreckt. In Strömungsrichtung erstreckt sich die Trennwand 33 von einem Luftleitelement 38 des Wärmeübertrager-Segments 3 mit Unterbrechungen, in denen Wärmeübertrager angeordnet sind, bis hin zu einem Auslaßbereich 35 des Wärmeübertrager-Segments 3. Zur Umlenkung der durch einen Ausgangsstutzen 36 des Gebläse-Segments 2 strömenden Frisch- und Umluftstroms ist in Fortsetzung eines Eingangsstutzens 37 des Wärmeübertrager-Segments 3 ein bogenförmiges Luftleitelement 38 angeordnet, das den Luftstrom zu einem Verdampfer 39 hin umlenkt, so daß diese im wesentlichen frei von Verwirbelungen in den Verdampfer 39 eingeleitet werden. Alternativ kann sich das Luftleitelement 38 auch stufenförmig von einer Stirnwand 34 hin zu dem Verdampfer 39 erstrecken, so daß gleichfalls eine gleichmäßige Durchströmung des Verdampfers 39 gewährleistet ist. Im weiteren Verlauf werden der Frischluftstrom und der Umluftstrom jeweils getrennt in dem Frischluftkanal 26 bzw. Umluftkanal 27 einem Heizkörper 40 und einer als PTC-Heizung ausgebildeten Zusatzheizung 41 zugeleitet, bevor Sie durch geeignete Stellelemente in dem Auslaßbereich 35 den entsprechenden Auslaßstutzen zugeführt werden.

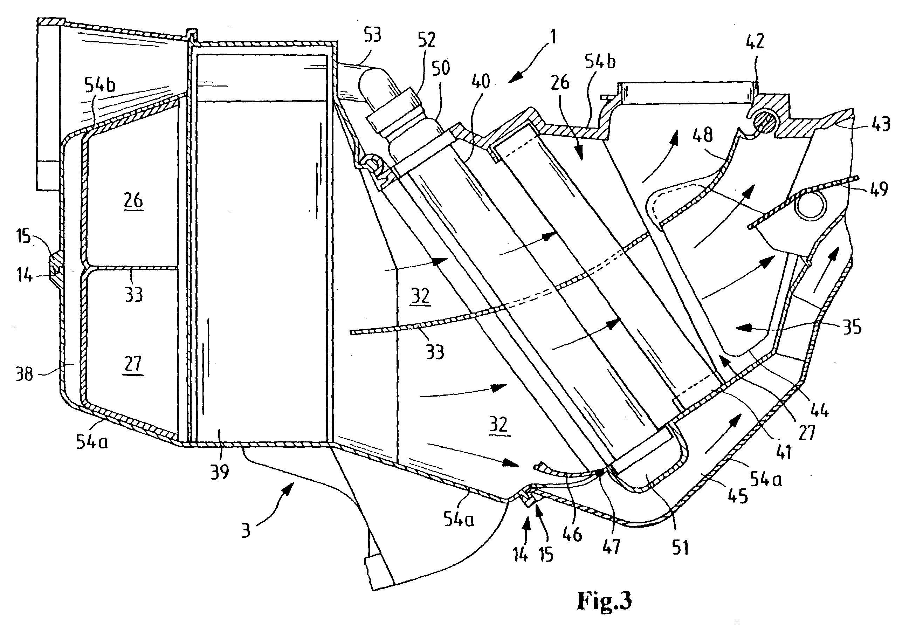

Wie aus **Fig. 3** ersichtlich, sind im Auslaßbereich 35 mehrere Ausgangsstutzen angeordnet, wobei ein Defroster-Ausgangsstutzen 42 dem Frischluftkanal 26 und ein mittlerer Ausgangsstutzen 43 sowie ein Fußraum-Ausgangsstutzen 44 dem Umluftkanal 27 zugeordnet sind. In dieser Betriebsstellung wird dem mit einer nicht dargestellten Defrosterdüse in Verbindung stehender Defroster-Ausgangsstutzen 42 trockene und gegebenenfalls erwärmte Frischluft zugeführt, so daß ein Beschlagen der Winschutzscheibe wirksam vermieden bzw. schneller beendet wird. Der mittlere Ausgangsstutzen 43, der mit Mitteldüsen und Seitendüsen in Verbindung steht, und der Fußraum-Ausgangsstutzen 44, der mit einer Fußraumdüse in Verbindung steht, erhalten die Umluft aus dem Fahrzeuginnenraum, wobei diese je nach den Bedürfnissen der Bedienperson mit einer vorgewählten Temperatur bereitgestellt wird. Die Temperatursteuerung der Umluft und der Frischluft kann dabei in begrenztem Rahmen unabhängig voneinander erfolgen. Zu diesem Zweck wird die Zusatzheizung 41 getrennt nach Frischluftkanal 26 und Umluftkanal 27 angesteuert.

Außenseitig neben dem Umluftkanal 27 erstreckt sich ein Bypasskanal 45, an dessen Eingang vorzugsweise eine Steuerklappe 46 drehbar um eine Schwenkachse 47 gelagert ist. Je nach Stellung der Steuerklappe 46 wird ein mehr oder weniger großer Teilstrom der Umluft an dem Heizkörper 40 und der Zusatzheizung 41 herumgeleitet, so daß gekühlte Luft dem mittleren Ausgangsstutzen 43 zur Verfügung gestellt werden kann.

Vorzugsweise ist im Auslaßbereich 35 in Verlängerung der Trennwand 33 ein Luftleitelement 48 angeordnet, das zum einen die Trennung von Frischluft und Umluft aufrechterhält und zum anderen durch seine drehbare Lagerung als Klappe ausgebildet ist. Bei Verstellung des Luftleitelements 48 aus der Mittelstellung in Richtung des Frischluftkanals 26 oder des Umluftkanals 27, wird ein Teilstrom der Frischluft dem mittleren Ausgangsstutzen 43 oder dem Fußraum-Ausgangsstutzen 44 bzw. ein Teilstrom der Umluft dem Defroster-Ausgangsstutzen 42 zugeführt. Auf diese Weise läßt sich ausgangsseitig eine begrenzte Vermischung von Frischluft und Umluft erreichen, so daß beispielsweise an extrem kalten Wintertagen und beim Starten des Fahrzeugs eine durch Sonnenstrahlung im Fahrzeuginnenraum erhitzte Umluft zur Vermeidung des Beschlagens der Windschutzscheibe dem Defroster-Ausgangsstutzen 42 zugeführt werden kann.

Weiterhin ist in dem Auslaßbereich 35 eine drehbar gelagerte Schwenkklappe 49 angeordnet, mit der die Luftströmungsrichtung der Umluft und die Umluftmenge gesteuert werden kann.

Der Heizkörper 40 weist einem oberen Wasserkasten 50 und einen unteren Wasserkasten 51 auf. An dem oberen Wasserkasten 50 befinden sich Aufnahmestutzen 52 zur Aufnahme und Befestigung von Anschlußrohren 53, durch die das Heizmedium dem Heizkörper 40 zugeleitet wird.

Das Wärmeübertrager-Segment 3 ist wie das Gebläse-Segment 2 aus mehreren Segmentteilen aufgebaut. Die Seitenwandungen 31 und 32 bestehen jeweils aus zwei Segmentteilen 54a, 54b, die mittels einer Feder/Nut- Verbindung miteinander verbunden sind. Dazu weisen sie, wie die Segmentteile des Gebläse-Segments 2, randseitig verlaufende Federn 15 auf, die jeweils in eine korrespondierende Nut 15 eingreifen und mit dieser formschlüssig verbunden sind. Vorzugsweise ist der untere Segmentteil 54a als einstückige Wanne ausgebildet, so daß lediglich das obere Segmentteil 54b aus zwei Wandabschnitten besteht. Das Wärmeübertrager-Segment 3 ist symmetrisch bezüglich der sich entlang der Schnittebene II-II aus Fig. 2 erstreckenden Längsebene aufgebaut. Dadurch ist es möglich, daß durch Umlegen des Luftleitelements 38 und Anbringen des Gebläse-Segments 2 an dem gegenüberliegenden Eingangsstutzen 37 des Wärmeübertrager-Segments 3 eine Klimaanlage geschaffen wird, die in einem Kraftfahrzeug einsetzbar ist, dessen Instrumententafel auf einer anderen Seite angeordnet ist. Durch diese Maßnahme sind konstruktive Änderungen im Bereich des Armaturenbretts bzw. der Instrumententafel nicht notwendig, so daß ein einfacher Einbau der Klimaanlage sowohl in einem linksgelenkten Fahrzeug als auch in einem rechtsgelenkten Fahrzeug gewährleistet ist.

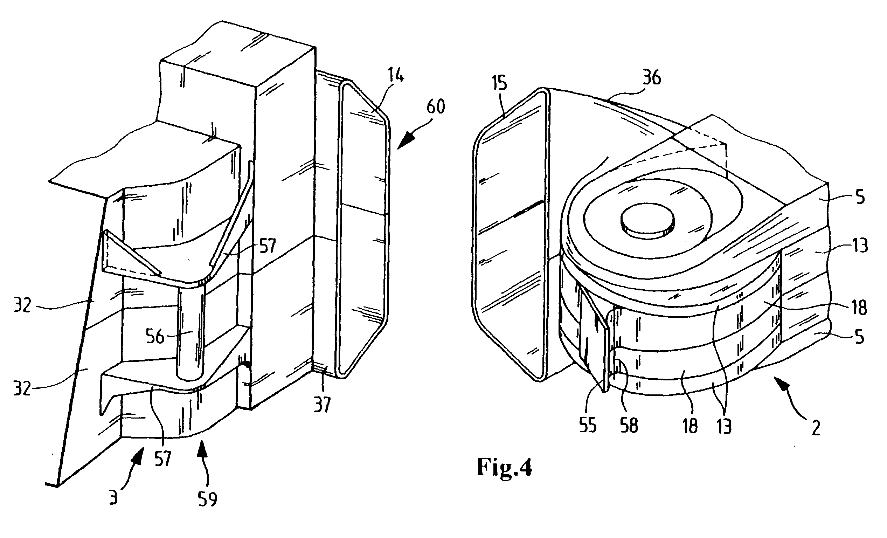

**Fig. 4** zeigt eine perspektivische Darstellung des Wärmeübertrager-Segments 3 im Bereich des Eingangsstutzens 37 (linke Seite) und eines Gebläse-Segments 2 in dem Bereich des Ausgangsstutzens 36 (rechte Seite). Zur Verbindung des Gebläse-Segments 2 mit dem Wärmeübertrager-Segment 3 wird ein sich über die Segmentteil 18 erstrekkender und an diese angeformter Haken 55 an die Umfangsfläche eines Bolzens 56 des Wärmeübertrager-Segments 3 angelegt. Der Bolzen 56 ist zylinderförmig ausgebildet und ist an seinen Stirnseiten mit jeweils einer Tragwand 57 verbunden, die sich senkrecht zu der Seitenwandung 32 des Wärmeübertrager-Segments 3 erstreckt und an diese angeformt ist. Die Länge des Bolzens 56 entspricht im wesentlichen der randseitigen Länge des Hakens 55, der sich mit seinen innenseitigen gebogenen Flächen 58 in einem ersten Verbindungsbereich 59 auf die Umfangsfläche des Bolzens 56 legt. Durch nachfolgende Schwenkbewegung des Gebläse-Segments 2 und/oder des Wärmeübertrager-Segments 3 in Richtung zueinander erfolgt in einem zweiten Verbindungsbereich 60 die Anlage des Ausgangsstutzens 36 des Gebläse-Segments 2 mit dem Eingangsstutzens 37 des Wärmeübertrager-Segments 3. Zu diesem Zweck weist der Ausgangsstutzen 36 eine hervorstehende Feder 15 auf, die in eine korrespondierende Nut 14 eingreift und in dieser gehalten ist. Vorzugsweise ist die Längserstreckung des Hakens 55 unwesentlich geringer als der Abstand der innenseitigen Flächen der parallel angeordneten Tragwände 57, so daß eine sichere Führung für die Schwenkbewegung und die nachfolgende Verrastung des Ausgangsstutzens 36 mit dem Eingangsstutzen 37 gegeben ist.

Zur Verbindung des Gebläse-Segments 2 mit dem Wärmeübertrager-Segment 3 auf der gegenüberliegenden Seite des Wärmeübertrager-Segments 3 an der Seitenwandung 31 weist das Wärmeübertrager-Segment 3 einen weiteren Bolzen 56 auf, der symmetrisch zu dem der Seitenwandung 32 zugeordnetem Bolzen 56 angeordnet ist. Da das Gebläse-Segment 2 symmetrisch ausgebildet ist, kann dieses seitenverkehrt an dem der Seitenwandung 31 zugeordneten Eingangsstutzen 37 arretiert werden, wobei die vormalige Frischluftkammer 16 als Umluftkammer 17 und die vormalige Umluftkammer 17 als Frischluftkammer 16 dient. Die einzelnen Segmentteile 5, 13, 18 und die Seitenwandungen 31, 32 werden durch nicht dargestellte Verrastungen kraftschlüssig zu dem Gehäuse 1 zusammengehalten. Sie werden vorzugsweise jeweils als Spritzgußteile aus Kunststoff hergestellt. Zusätzlich braucht lediglich das Luftleitelement 38 um 180° verdreht werden, so daß ein Verschlußabschnitt 61 des Luftleitelements 38 den gegenüberliegenden Eingangsstutzen 37 verschließt. Die formschlüssige Verbindung erfolgt durch Eingreifen der Feder 15 in die dafür vorgesehene Nut 14 der Seitenwandung 32 bzw. der Seitenwand 34.

## Patentansprüche

1. Heizungs- oder Klimaanlage für ein Kraftfahrzeug mit einem ein Gebläse-Segment (2) und ein Wärmeübertrager-Segment (3) aufweisenden Gehäuse (1), wobei in dem Gebläse-Segment (2) ein Gebläse (12) und in dem Wärmeübertrager-Segment (3) mindestens ein Wärmeübertrager (39, 40) angeordnet sind, **dadurch gekennzeichnet, daß** das Gehäuse (1) in Modulbauweise aus dem Gebläse-Segment (2) und dem Wärmeübertrager-Segment (3) zusammensetzbar ist, derart, daß das Gebläse-Segment (2) und das Wärmeübertrager-Segment (3) aus mehreren Segmentteilen (5, 13, 18, 54) bestehen, wobei die Segmentteile (5, 13, 18) des Gebläse-Segments (2) symmetrisch bezüglich einer Längsebene des Gebläse-Segments (2) und die Segmentteile (54) des Wärmeübertrager-Segments (3) symmetrisch bezüglich einer Längsebene des Wärmeübertrager-Segments (3) ausgebildet sind.

2. Anlage nach Anspruch 1, **dadurch gekennzeichnet, daß** die Segmentteile (5, 13, 18, 54) jeweils durch eine Nut/Feder-Verbindung formschlüssig zu dem Gebläse-Segment (2) bzw. dem Wärmeübertrager-Segment (3) gehalten sind.

3. Anlage nach Anspruch 1 oder zwei, **dadurch gekennzeichnet, daß** zur Verbindung von zwei Segmentteilen (5, 13, 18, 54) ein erstes Segmentteil (5, 13, 18, 54) eine Feder (15) aufweist, die in eine Nut (14) eines zweiten Segmentteils (5, 13, 18, 54) einsetzbar ist.

4. Anlage nach Anspruch 3, **dadurch gekennzeichnet, daß** sich die Feder (15) und die zu dieser korrespondierende Nut (14) jeweils entlang der randseitigen Außenkontur der mit zueinander verbindenden Segmentteile (5, 13, 18, 54) erstrecken.

5. Anlage nach einem oder mehreren der Ansprüche 1 bis 4, **dadurch gekennzeichnet, daß** das Wärmeübertrager-Segment (3) und das Gebläse-Segment (2) Befestigungsmittel (14, 15, 55, 56) aufweisen, derart, daß das Wärmeübertrager-Segment (3) und das Gebläse-Segment (2) in einem ersten Verbindungsbereich (59) scharnierartig und in einem zweiten Verbindungsbereich (60) nach einer Nut/Feder-Verbindung miteinander verbunden sind.

6. Anlage nach Anspruch 5, **dadurch gekennzeichnet, daß** an dem Wärmeübertrager-Segment (3) in dem ersten Verbindungsbereich (59) ein zylinderförmiger Bolzen (56) angeformt ist, um dessen Mantelfläche ein korrespondierender Haken (55) des Gebläse-Segments (2) anlegbar und durch eine Schwenkbewegung desselben in eine Arretierungsposition bewegbar ist.

7. Anlage nach Anspruch 5 oder 6, **dadurch gekennzeichnet, daß** das Gebläse-Segment (2) und das Wärmeübertrager-Segment (3) in dem zweiten Verbindungsbereich (60) eine Nut (14) bzw. eine Feder (15) aufweisen, so daß das Wärmeübertrager-Segment (3) und das Gebläse-Segment (2) formschlüssig in der Arretierungsposition gehalten sind.

8. Anlage nach einem oder mehreren der Ansprüche 5 bis 7, **dadurch gekennzeichnet, daß** der Bolzen (56) jweils stirnseitig von einer Tragwand (57) derart gehalten ist, daß der Bolzen (56) mit seiner vollständigen Mantelfläche von der Seitenwandung (31, 32) des Wärmeübertrager-Segments (3) beabstandet ist.

9. Anlage nach Anspruch 8, **dadurch gekennzeichnet, daß** die Tragwände (57) stirnseitig an dem Bolzen (56) angeformt sind und derart voneinander beabstandet sind, daß der Haken (55) etwa passgenau an die Umfangsfläche des Bolzens (56) angelegt werden kann.

10. Anlage nach einem oder mehreren der Ansprüche 1 bis 9, **dadurch gekennzeichnet, daß** die Längsebene des Gebläse-Segments (2) die Mittelebene (4) eines auf einer Antriebswelle (10) des Gebläses (12) drehfest angeordneten Laufrads (11) bildet, wobei das Laufrad (11) zwei koaxial zueinander angeordnete Teillaufräder (21, 22) aufweist, deren gemeinsame Verbindungswand (24) sich in der Mittelebene (4) erstreckt, und daß die Segmentteile (5, 13, 18) einen jeweils einem Teillaufrad (21, 22) zugeordneten bogenförmigen Gebläse-Abschnitt bilden, derart, daß dem ersten Teillaufrad (21) eine Frischluftkammer (16) zur Führung eines Frischluftstroms und dem zweiten Teillaufrad (22) eine Umluftkammer (17) zur Führung eines Umluftstroms zugeordnet ist.

11. Anlage nach einem oder mehreren der Ansprüche 1 bis 10, **dadurch gekennzeichnet, daß** das Gebläse-Segment (2) ein mittleres Segmentteil (18) mit einer sich radial nach innen erstreckenden Trennwand (25), die sich in der Mittelebene (4) erstreckt, aufweist.

12. Anlage nach einem oder mehreren der Ansprüche 1 bis 11, **dadurch gekennzeichnet, daß** das Gebläse-Segment (2) gegenüberliegende äußere Segmentteile (13) mit jeweils einer zylinderförmigen, senkrecht zur Mittelebene (4) erstreckenden Wandung als Aufnahmetasche (8) zur Aufnahme eines Gebläsemotors (9) aufweist.

13. Anlage nach einem oder mehreren der Ansprüche 1 bis 12, **dadurch gekennzeichnet, daß** sich die Längsebene des Wärmeübertrager-Segments (3) senkrecht zur Mittelebene (4) des in dem Gebläse-Segment (2) angeordneten Laufrades (11) erstreckt.

## Claims

1. A heating or air-conditioning system for a motor vehicle having a housing (1) with a fan segment (2) and a heat exchanger segment (3), a fan (12) being positioned in the fan segment (3) and at least one heat exchanger (39, 40) being positioned in the heat exchanger segment (3),
**characterised in that**
the housing (1) can be assembled in modular fashion from the fan segment (2) and the heat exchanger segment (3) in such a manner that the fan segment (2) and the heat exchanger segment (3) consist of several segment parts (5, 13, 18, 54), the segment parts (5, 13, 18) of the fan segment (2) being formed symmetrically in relation to a longitudinal plane of the fan segment (2) and the segment parts (54) of the heat exchanger segment (3) being formed symmetrically in relation to a longitudinal plane of the heat exchanger segment (3).

2. A system in accordance with claim 1,
**characterised in that**
the segment parts (5, 13, 18, 54) are held together with the fan segment (2) or the heat exchanger segment (3) positively by means of a groove/spring connection.

3. A system in accordance with claim 1 or 2,
**characterised in that**
for the connection of two segment parts (5, 13, 18, 54), a first segment part (5, 13, 18, 54) has a spring (15) which can be inserted into a groove (14) in a second segment part (5, 13, 18, 54).

4. A system in accordance with claim 3,
**characterised in that**
the spring (15) and the corresponding groove (14) both extend along the contour of the outer edge of the segment parts (5, 13, 18, 54) connecting them together.

5. A system in accordance with one or more of claims 1 to 4,
**characterised in that**
the heat exchanger segment (3) and the fan segment (2) have fixing means (14, 15, 55, 56) such that the heat exchanger segment (3) and the fan segment (2) are connected together in the manner of a hinge in a first connecting area (59) and in the manner of a groove/spring connection in a second connecting area (60).

6. A system in accordance with claim 5,
**characterised in that**
formed as one piece with the heat exchanger segment (3) in the first connecting area (59) is a cylindrical bolt (56) against the outer surface of which can be placed a corresponding hook (55) on the fan segment (2) which can be moved into a locking position by means of a pivoting movement.

7. A system in accordance with claim 5 or 6,
**characterised in that**
the fan segment (2) and the heat exchanger segment (3) have a groove (14) and a spring (15) in the second connecting area (60) such that the heat exchanger segment (3) and the fan segment (2) are held in the blocked position in a positive connection.

8. A system in accordance with one or more of claims 5 to 7,
**characterised in that**
the end faces of the bolt (56) are held by load-bearing walls (57) in such a manner that the entire outer surface of the bolt (56) is positioned a distance from the side wall (31, 32) of the heat exchanger segment (3).

9. A system in accordance with claim 8,
**characterised in that**
the load-bearing walls (57) are formed as one piece with the end faces of the bolt (56) and positioned a certain distance from one another such that the hook (55) can be placed almost exactly against the peripheral surface of the bolt (56).

10. A system in accordance with one or more of claims 1 to 9,
**characterised in that**
the longitudinal plane of the fan segment (2) forms the centre plane (4) of an impeller (11) mounted in such manner that it is unable to rotate on a drive shaft (10) of the fan (12), the impeller (11) having two part impellers (21, 22) positioned coaxially one in relation to the other, the common connecting wall (24) of which extends along the centre plane (4), and that the segment parts (5, 13, 18) form a curved fan section which is associated with one of the part impellers (21, 22) in such a manner that a fresh air chamber (16) to supply a flow of fresh air is associated with the first part impeller (21) and a recirculating air chamber (17) to supply a flow of recirculating air is associated with the second part impeller (22).

11. A system in accordance with one or more of claims 1 to 10,
**characterised in that**
the fan segment (2) has a central segment part (18) with a dividing wall (25) which extends radially inwards and along the centre plane (4).

12. A system in accordance with one or more of claims 1 to 11,
**characterised in that**
the fan segment (2) has opposing outer segment parts (13) each with a cylindrical wall extending vertically in relation to the centre plane (4) as a receiving pocket (8) to receive a fan motor (9).

13. A system in accordance with one or more of claims 1 to 12,
**characterised in that**
the longitudinal plane of the heat exchanger segment (3) extends vertical to the centre plane (4) of the impeller (11) positioned in the fan segment (2).

## Revendications

1. Installation de chauffage ou de climatisation pour un véhicule automobile, comportant un boîtier (1) présentant un segment pour soufflante (2) et un segment pour échangeurs de chaleur (3), dans le segment pour soufflante (2) étant disposée une soufflante (12) et dans le segment pour échangeurs de chaleur (3) étant disposé au moins un échangeur de chaleur (39, 40), **caractérisée en ce que** le boîtier (1) peut être assemblé en mode de construction modulaire, à partir du segment pour soufflante (2) et du segment pour échangeurs de chaleur (3), de manière que le segment pour soufflante (2) et le segment pour échangeurs de chaleur soient formés d'une pluralité de parties de segment (5, 13, 18, 54), les parties de segment (5, 13, 18) du segment pour soufflante (2) étant réalisées symétriquement par rapport à un plan longitudinal du segment pour soufflante (2), et les parties de segment (54) du segment pour échangeurs de chaleur (3) étant réalisées symétriquement par rapport à un plan longitudinal du segment pour échangeurs de chaleur (3).

2. Installation selon la revendication 1, **caractérisée en ce que** les parties de segment (5, 13, 18, 54) sont maintenues chacune, par une liaison à languette-rainure à ajustement de forme, pour former le segment pour soufflante (2) et/ou au segment pour échangeurs de chaleur (3).

3. Installation selon la revendication 1 ou 2, **caractérisée en ce que**, afin d'assurer la liaison de deux parties de segment (5, 13, 18, 54), une première partie de segment (5, 13, 18, 54) présente une languette (15) pouvant être inséré dans une rainure (14) d'une deuxième partie de segment (5, 13, 18, 54).

4. Installation selon la revendication 3, **caractérisée en ce que** le languette (15) et la rainure (14) correspondant à celle-ci s'étendent chacune le long du contour extérieur de bordure des parties de segment (5, 13, 18, 54) à relier ensemble.

5. Installation selon l'une ou plusieurs des revendications 1 à 4, **caractérisée en que** le segment pour échangeurs de chaleur (3) et le segment pour soufflante (2) présentent des moyens de fixation (14, 15, 55, 56) de manière que le segment pour échangeurs de chaleur (3) et le segment pour soufflante (2) soient reliés ensemble à la façon d'une charnière dans une première zone de liaison (59) et selon une liaison de type à languette/rainure dans une deuxième zone de liaison (60).

6. Installation selon la revendication 5, **caractérisée en ce que**, sur le segment pour échangeurs de chaleur (3), est formé d'un seul tenant, dans la première zone de liaison (59), un tourillon (56) de forme cylindrique, autour de la surface d'enveloppe duquel peut être appliqué un crochet (55) correspondant, appartenant au segment pour soufflante (2) et qui est déplaçable jusqu'à une position de blocage de celui-ci, par un mouvement de pivotement.

7. Installation selon la revendication 5 ou 6,
**caractérisée en ce que** le segment pour soufflante (2) et le segment pour échangeurs de chaleur (3) présentent, dans la deuxième zone de liaison (60), respectivement une rainure (14) ou une languette (15), de telle sorte que le segment pour échangeurs de chaleur (3) et le segment pour soufflante (2) soient maintenus à la position de blocage par une liaison à ajustement de forme.

8. Installation selon l'une ou plusieurs des revendications 1 à 7, **caractérisée en que** le tourillon (56) est maintenu chaque fois frontalement par une paroi support (57), de manière que le tourillon (56) soit espacé par la totalité de sa surface d'enveloppe, vis-à-vis de la paroi latérale (31, 32) du segment pour échangeurs de chaleur (3).

9. Installation selon la revendication 8, **caractérisée en ce que** les parois supports (57) sont formées d'un seul tenant frontalement sur le tourillon (56) et espacées l'une de l'autre, de manière que le crochet (54) puisse être appliqué de façon à peu près ajustée précisément sur la surface périphérique du tourillon (56).

10. Installation selon l'une ou plusieurs des revendications 1 à 9, **caractérisée en ce que** le plan longitudinal du segment pour soufflante (2) forme le plan médian (4) d'un rotor (11) assujetti en rotation sur un arbre d'entraînement (10) de la soufflante (12), le rotor (11) présentant deux rotors partiels (21, 22) disposés coaxialement l'un à l'autre, dont la paroi de liaison (24) commune s'étend dans le plan médian (4), et **en ce que** les parties de segment (5, 13, 18) forment un tronçon de soufflante en forme d'arc chaque fois associé à un rotor partiel (21, 22), de manière que, au premier rotor partiel (21), soit associée une chambre d'air neuf (16) pour le guidage d'un flux d'air neuf et, au deuxième rotor partiel (22), soit associée une chambre d'air de recyclage (17) devant guider un flux d'air de recirculation.

11. Installation selon l'une ou plusieurs des revendications 1 à 10, **caractérisée en ce que** le segment pour soufflante (2) présente une partie de segment (18) médiane avec une paroi de séparation (25) s'étendant radialement vers l'intérieur, qui s'étend dans le plan médian (4).

12. Installation selon l'une ou plusieurs des revendications 1 à 11, **caractérisée en ce que** le segment pour soufflante (2) présente des parties de segment extérieures (13) opposées, ayant chacune une paroi en forme de cylindre, s'étendant perpendiculairement au plan médian (4), en tant que poche de logement (28) pour loger un moteur de soufflante (9).

13. Installation selon l'une ou plusieurs des revendications 1 à 12, **caractérisée en ce que** le plan longitudinal d'un segment pour échangeurs de chaleur (3) s'étend perpendiculairement au plan médian (4) du rotor (11) disposé dans le segment pour soufflante (2).
